# EUROPEAN PATENT APPLICATION

(11) **EP 3 093 795 A1**
(43) Date of publication of application: **16.11.2016**
(21) Application number: 15167343.1
(22) Date of filing: 12.05.2015
(51) Int. Cl.: G06K 9/00

(54) **AN APPARATUS AND METHOD FOR PROVIDING IDENTIFICATION**

(71) Applicant: Nokia Technologies Oy, 02610 Espoo (FI)
(72) Inventor: Voutilainen, Martti Kalevi, 02660 Espoo (FI); Kononenko, Oleksandr, 00440 Helsinki (FI)
(74) Representative: Anglesea, Christine Ruth

(57) **Abstract**

An apparatus and method, the apparatus comprising: an identification portion wherein the identification portion is configured to be positioned between at least one source of alpha particles and an alpha particle detector and wherein the identification portion comprises a random graphene structure.

## Description

### TECHNOLOGICAL FIELD

Examples of the disclosure relate to an apparatus and method for providing identification. Particular examples of the disclosure relate to an apparatus and method for providing identification using a physically unclonable function.

### BACKGROUND

Identification devices such as keys and identity cards are known. It is useful to make such devices difficult or impossible to copy to provide physically unclonable functions.

### BRIEF SUMMARY

According to various, but not necessarily all, examples of the disclosure there may be provided an apparatus comprising: an identification portion wherein the identification portion is configured to be positioned between at least one source of alpha particles and an alpha particle detector and wherein the identification portion comprises a random graphene structure.

In some examples the random graphene structure may be arranged to give a unique scattering pattern of the alpha particles.

In some examples the random graphene structure may comprise multi-layers of graphene covered by random sized graphene elements. The graphene elements may comprise at least one of graphene flakes, carbon nanotube networks.

In some examples the random graphene structure may provide a physically unclonable function.

In some examples the identification portion may comprise a support structure and an overlaying random structure. The support structure may enable the apparatus to be identified as a member of a group of apparatus. The overlaying random structure may enable the apparatus to be uniquely identified.

In some examples the apparatus may be configured to be used as a mechanical key.

In some examples the apparatus may further comprise at least one source of alpha particles.

In some examples the at least one source of alpha particles may comprise Americium 241.

In some examples there may be provided an identification device comprising an apparatus as described above.

In some examples there may be provided a system comprising an apparatus as described above and an alpha particle detector.

According to various, but not necessarily all, examples of the disclosure there may be provided a method comprising: providing an identification portion wherein the identification portion is configured to be positioned between at least one source of alpha particles and an alpha particle detector and wherein the identification portion comprises a random graphene structure.

In some examples the random graphene structure may be arranged to give a unique scattering pattern of the alpha particles.

In some examples the random graphene structure may comprise multi-layers of graphene covered by random sized graphene elements. The graphene elements may comprise at least one of graphene flakes, carbon nanotube networks.

In some examples the random graphene structure may provide a physically unclonable function.

In some examples the identification portion may comprise a support structure and an overlaying random structure. The support structure may enable the apparatus to be identified as a member of a group of apparatus. The overlaying random structure may enable the apparatus to be uniquely identified.

In some examples the support structure may be configured to be used as a mechanical key.

In some examples the method may further comprise providing at least one source of alpha particles.

In some examples the at least one source of alpha particles may comprise Americium 241.

According to various, but not necessarily all, examples of the dislcousre, there is provided examples as claimed in the appended claims.

### BRIEF DESCRIPTION

For a better understanding of various examples that are useful for understanding the detailed description, reference will now be made by way of example only to the accompanying drawings in which:
Fig. 1 illustrates an apparatus;
Fig. 2 illustrates an identification portion;
Fig. 3 illustrates a system;
Fig. 4 illustrates another system; and
Fig. 5 illustrates a method.

### DETAILED DESCRIPTION

The Figures illustrate example apparatus 1 and methods. The apparatus 1 comprises an identification portion 3 wherein the identification portion 3 is configured to be positioned between a source 33 of alpha particles and an alpha particle detector 35 and wherein the identification portion 3 comprises a random graphene structure 5.

The apparatus 1 may be for providing identification. The apparatus 1 may be provided within an identification device. The identification device could be a key, an identification card, a passport, access card which enables access to a building, room or computer or any suitable type of identification device.

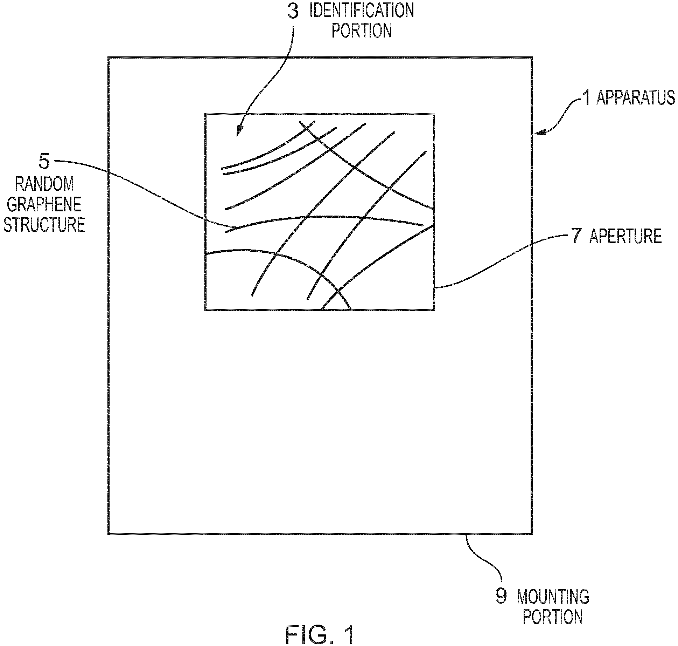

Fig. 1 schematically illustrates an apparatus 1 according to examples of the disclosure. The example apparatus 1 of Fig. 1 comprises an identification portion 3 and a mounting portion 9. The identification portion 3 may be provided within the mounting portion 9.

The mounting portion 9 may comprise any means which may be configured to support an identification portion 3. The mounting portion 9 may comprise an aperture 7 within which the identification portion 3 may be mounted. In the example of Fig. 1 both the mounting portion 9 and the aperture 7 are rectangular. It is to be appreciated that any shape of mounting portion 9 and aperture 7 may be used in other examples of the disclosure.

The mounting portion 9 may be sized and shaped so as to enable the identification portion 3 of the apparatus to be positioned between a source 33 of alpha particles and a detector 35. The mounting portion 9 may be sized and shaped so as to fit in a gap between a source 33 of alpha particles and a detector 35. In some examples the mounting portion 9 may be sized and shaped so that the apparatus 1 can be easily carried by the user. For instance, where the apparatus 1 is to be used as a key or authentication device the mounting portion 9 may enable the apparatus 1 to be carried in a user's pocket, wallet, bag or other suitable means.

The mounting portion 9 may comprise a material which may block an incident beam of alpha particles. For example the mounting portion 9 may comprise plastic, paper, card or any other suitable material.

In the example apparatus 1 of Fig. 1 the identification portion 3 is provided within the aperture 7. The identification portion 3 may comprise any structure which may be configured to scatter incident alpha particles. The identification portion 3 may be configured to enable at least some of an incident beam of alpha particles to pass through but will scatter and/or block other alpha particles from the beam. This creates a scattering pattern for an incident beam of alpha particles. The scattering pattern may enable the apparatus 1 to be identified.

In some examples the identification portion 3 may be arranged to give a unique scattering pattern of the alpha particles. This may enable the apparatus 1 to be uniquely identified.

In the example apparatus 1 of Fig. 1 the identification portion 3 comprises a random graphene structure 5. The random graphene structure 5 may provide a physically unclonable function.

In some examples the random graphene structure 5 may comprise only graphene. In other examples the random graphene structure 5 may comprise other materials in addition to graphene.

In some examples the random graphene structure 5 may comprise a support structure and an overlaying random structure. In some examples the support structure may comprise multi-layers of graphene. The overlaying random structure may comprise random sized graphene elements. The random sized graphene elements may cover the multi-layers of the graphene. The random sized graphene elements may comprise one or more of graphene flakes, carbon nanotube networks or any other suitable graphene elements. The graphene elements may be random sized in that they may have random surface areas and/or random thicknesses.

The random graphene structure 5 may have a thickness which allows at least some of a beam of alpha particles to pass through but blocks or scatters at least some of the beam of alpha particles. In some examples the random graphene structure 5 may have a thickness of up to 20 micrometers. It is to be appreciated that as the structure is random the thickness of the structure is non-uniform and different parts of the random graphene structure 5 may have different thicknesses.

The random graphene structure 5 may be formed using any suitable technique. In some examples the random graphene structure 5 may comprise randomly sized graphene flakes. The randomly sized graphene flakes may be formed by placing bulk graphite in a solution and bombarding the graphite by performing ultrasonication on the solution. This bombardment causes thin sheets of graphene to break off the graphite and form graphene flakes. The graphene flakes will be of random sizes. The solution can then be filtered to provide a graphene film comprised of randomly sized and stacked graphene flakes.

In some examples, randomly stacked graphene film comprising randomly sized and stacked graphene flakes may be formed by using sodium cholate surfactant for forming graphene flakes in solution. In such examples graphite flakes may be dispersed in 0.5% weight/ volume (w/v) sodium cholate in Millipore water (100 ml). The graphite is broken into graphene flakes by low-powered ultrasonication. The ultrasonication may be for approximately sixty minutes. Centrifugation may be used to separate the graphene flakes from the solution. The centrifugation may be for ninety minutes at 500rpm. After the centrifugation a portion of the supernatant is decanted and retained. In some examples the top 80% of supernatant is decanted and retained. Vacuum filtration may then be used to create a randomly stacked graphene film. The graphene film may be deposited on the identification portion 3 of an apparatus 1 using any suitable technique such as stamp printing.

It is to be appreciated that other methods of creating random graphene structures 5 may be used in other examples of the disclosure. The methods for producing the random graphene structures 5 may be easily repeatable but may produce a unique structure every time. Therefore each random graphene structure 5 is unique. This unique random graphene structure 5 may provide a physically unclonable function.

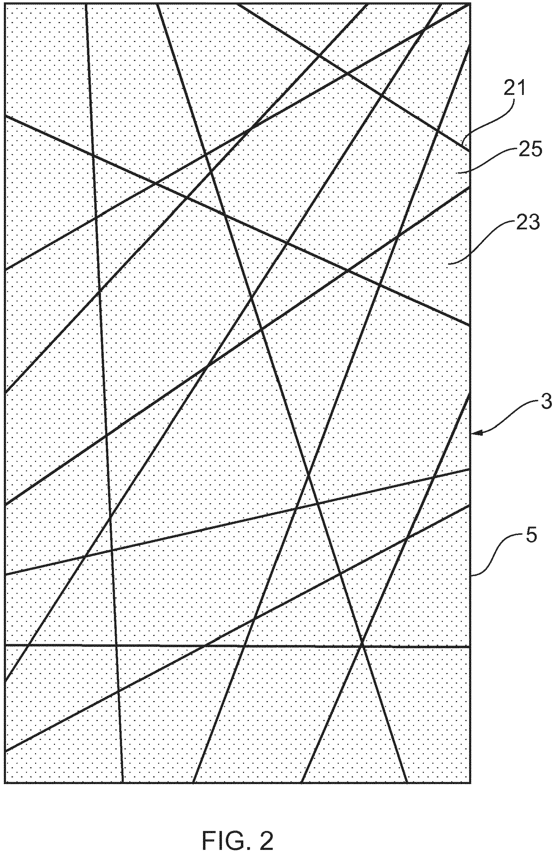

Fig. 2 illustrates an example identification portion 3 which may be used in examples of the disclosure. The identification portion 3 comprises a random graphene structure 5 as described above.

In the example of Fig. 2 the random graphene structure 5 comprises a support structure 21 and an overlaying random structure 23.

The support structure 21 may provide structural support for overlaying graphene elements. The support structure 21 may comprise a plurality of holes 25. The overlaying random structure may be provided within the holes 25. The support structure 21 may comprise a structure on a macroscopic scale. The holes 25 within the support structure 21 may provide a structure on a macroscopic scale.

In some examples the support structure 21 may comprise graphene. For example the support structure 21 may comprise multi layers of graphene. In other examples other materials may be used to provide the support structure 21.

In some examples the support structure 21 may be configured to be used as a mechanical key. For instance, the support structure 21 may have structural features which may be configured to fit into corresponding features of a mechanical lock. In some examples the structural features of the support structure 21 may comprise ridges or grooves along the edges or additional holes of varying shapes or any other suitable features. In some examples the structural features could be read by an identification mechanism as well as, or instead of, a mechanical lock. For instance a light source and sensor may be used to identify the shape of the support structure 21 and/or any holes within the support structure 21.

The overlaying random structure 23 may comprise any randomly sized components. In some examples the overlaying random structure 23 may provide a very fine scaled structure. In some examples the overlaying random structure 23 may comprise a structure on a microscopic scale. The overlaying random structure 23 may be provided within the holes 25 of the support structure 21.

The overlaying random structure 23 may comprise random sized graphene elements. The random sized graphene elements may comprise graphene flakes, carbon nanotube networks or any other suitable graphene elements.

It is to be appreciated that the support structure 21 may provide a structure on a first scale and the overlaying random structure 23 may provide a structure on a second scale. The first scale may be larger than the second scale.

In some examples the support structure 21 might not be unique. That is, an identical support structure 21 could be provided in a plurality of different apparatus 1. In such examples the overlaying random structure 23 may be unique for each apparatus and so may provide a physically unclonable function. In other examples both the support structure 21 and the overlaying random structure 23 might be unique.

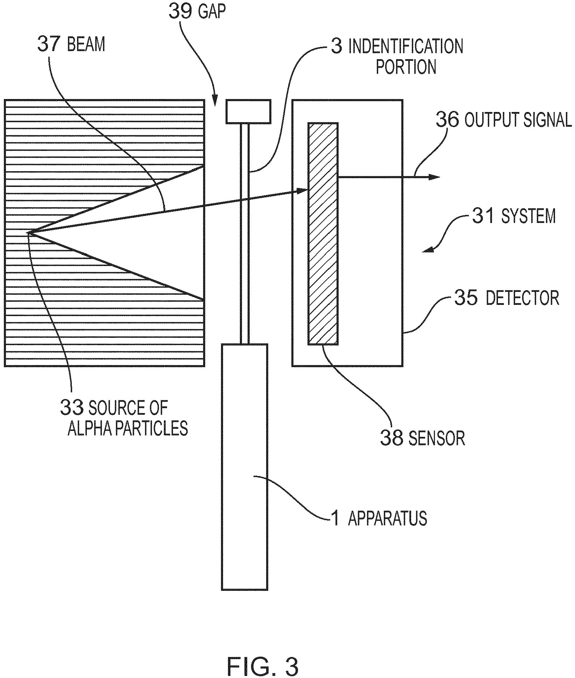

Fig. 3 schematically illustrates a system 31 which may be used to identify apparatus 1. The system 31 comprises an apparatus 1, a source 33 of alpha particles and a detector 35. The apparatus 1 may be positioned in a gap 39 between the source 33 of alpha particles and the detector 35 to enable the apparatus 1 to be identified. The apparatus 1 may be as described above. Corresponding reference numerals are used for corresponding features.

The source 33 of alpha particles may comprise any radioactive material which may emit a beam 37 of alpha particles. The system 31 may be arranged so that the beam 37 of alpha particles is directed towards the detector 35. In some examples the system 31 may be comprise means for focusing the beam 37 of alpha particles towards the detector 35.

Any suitable material may be used as the radioactive material. The radioactive material may comprise any material which has a level of radioactivity which is sufficient to provide a reliably detectable beam 37 but which will not expose users to a harmful level of radiation. In some examples the source 33 of alpha particles may comprise an isotope of Americium, ²⁴¹Am. In some examples the Americium may be provided in the form of Americium dioxide.

The amount of radioactive material within the source 33 of alpha particles may be sufficient to ensure that the beam 37 of alpha particles is intense enough to be detected even when an identification portion 3 of an apparatus 1 is positioned between then the source 33 of alpha particles and the detector 35 without exposing a user to a harmful level of radiation.

In some examples the source 33 of alpha particles may comprise 0.29 micrograms of ²⁴¹Am in the form of Americium dioxide. This may provide an activity of around 37,000 Bq (or about 1 µCi). This will provide 37,000 alpha particles per second. If the distance between the source 33 of alpha particles and the detector 35 is 1-2cm then approximately twenty percent of the alpha particles emitted by the source 33 of alpha particles should reach the detector 35 when no apparatus 1 is positioned between the source 33 of alpha particles and the detector 35.

When an apparatus 1 is positioned between the source 33 of alpha particles and the detector 35, then the random graphene structure 5 in the identification portion 3 will cause scattering of the beam 37 of alpha particles. If approximately half of the alpha particles pass through the random graphene structure 5 then this will provide approximately 3700 hits per second at the detector 35. As alpha particles can be easily detected this should provide a strong signal for detection at the detector 35.

The alpha particle detector 35 may comprise any means which may be configured to detect the beam 37 of alpha particles. The alpha particle detector 35 may be sensitive enough to detect the beam 37 of alpha particles after it has passed through an identification portion 3 of an apparatus 1.

The alpha particle detector 35 may comprise a sensor 38 configured to detect alpha particles. The sensor 38 may be configured to detect different positions of the incident alpha particles and so may enable a scattering pattern of alpha particles to be identified.

In some examples sensor 38 may comprise a plurality of pixels. The plurality of pixels may be arranged over a surface area. In some examples the sensor 38 may comprise a large number of pixels. For example, the sensor 38 may comprise several megapixels. By identifying which pixels have detected incident alpha particles a scattering pattern of the alpha particles may be obtained.

The sensor 38 may be configured to provide an output signal 36. The output signal 36 may comprise information indicative of the detected scattering pattern. The output signal may be provided to controlling circuitry. The controlling circuitry may be configured to use the output signal 36 to identify the apparatus 1. In some examples the controlling circuitry may be configured to identify an apparatus 1 by comparing a first detected scattering pattern with one or more reference scattering patterns.

In the example system a gap 39 is provided between the source 33 of alpha particles and the detector 35. The gap 39 may be sized so that the apparatus 1 can be positioned between the source 33 of alpha particles and the detector 35. The apparatus 1 may be removably positioned within the gap 39. In some examples the gap between the source 33 of alpha particles and the detector 35 may be approximately 1-2cm.

In the example system 31 of Fig. 3 a user has positioned an apparatus 1 in the gap 39 between the source 33 of the alpha particles and the detector 35. The apparatus 1 is positioned so that the beam 37 of alpha particles is incident on the identification portion 3. It is to be appreciated that the user may remove the apparatus 1 from the gap 39. It is also to be appreciated that different apparatus 1 may be positioned in the gap 39.

When an apparatus 1 is positioned between the source 33 of the alpha particles and the detector 35 this enables the apparatus 1 to be identified. The apparatus 1 may be identified by the scattering pattern of the alpha particles.

When no apparatus 1 is positioned between the source 33 of alpha particles and the detector 35 the beam 37 of alpha particles will be incident on the detector. There will be some attenuation of the beam 37 of alpha particles due to the air in the gap 39 however as the gap 39 is constant the detected pattern should be the same when no apparatus 1 is provided.

When an apparatus 1 is positioned between the source 33 of alpha particles and the detector 3 the random graphene structure 5 in the identification portion 3 will cause scattering of the beam 37 of alpha particles. As the random graphene structure 5 has a fine level of structure this will cause scattering of the beam 37 of alpha particles. As each random graphene structure 5 is unique this will provide a unique scattering pattern for each apparatus 1. The sensor 38 may be configured to provide an output signal 36 indicative of the detected scattering pattern. The detected scattering pattern may be compared against reference scattering patterns to enable the apparatus 1 to be uniquely identified.

In some examples the reference scattering patterns may be stored in memory circuitry within the detector 35. This may enable the detector 35 to detect the scattering pattern and identify the apparatus 1 and determine whether or not the apparatus 1 is an authorized apparatus 1.

In some examples the reference scattering patterns may be stored in remote memory circuitry. For instance the reference scattering patterns could be stored in a secure administrative system such as passport or banking or security system. In such examples the detector 35 may be configured to enable information indicative of the detected scattering pattern to be transmitted to the remote circuitry to enable the apparatus 1 to be identified and/or authenticated. The detector 35 may also be configured to receive an input signal from the remote circuitry. The received input signal may provide identification information or an indication of whether or not the apparatus 1 is an authorized apparatus.

In examples of the disclosure the apparatus 1 is positioned, by the user, between the source 33 of alpha particles and the detector 35 when the user wants the apparatus 1 to be identified. In the example of Fig. 3 the apparatus 1 is positioned in the middle of the gap 39. It is to be appreciated that the apparatus 1 may be positioned anywhere in the gap 39. In some examples the system 31 may be arranged so that, in use, the apparatus 1 is positioned as close as possible to the detector 35. In some examples the user may position the apparatus 1 so that the identification portion 3 is positioned adjacent to the sensor 38 of the detector 35. Positioning the identification portion 3 adjacent to the sensor 38 of the detector 35 may ensure that an accurate detection is obtained by the detector 35.

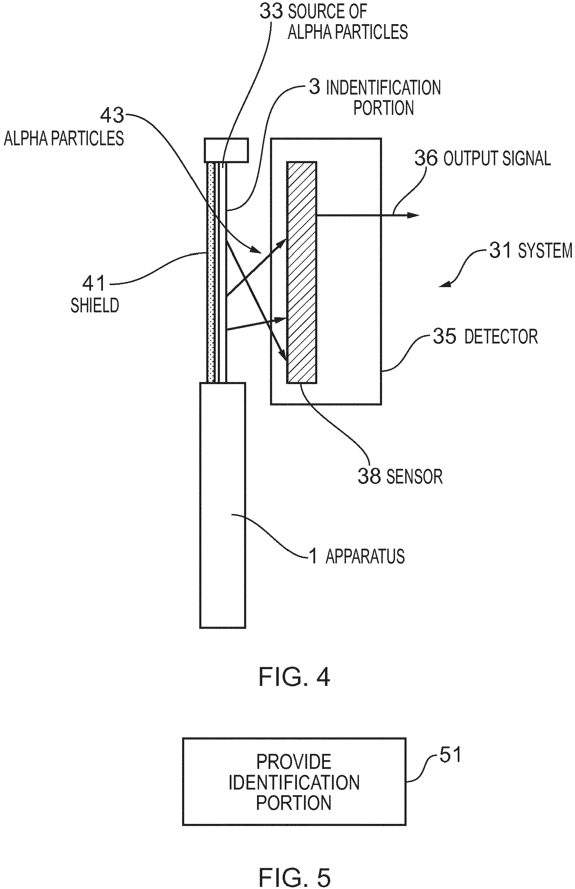

In the example system 31 of Fig. 3 the source 33 of alpha particles is provided separate to the apparatus 1. The source 33 of alpha particle is provided in a different device to the apparatus 1. Fig. 4 illustrates a different example system 31 in which the source 33 of alpha particles is provided within the apparatus 1.

Fig. 4 schematically illustrates another system 31 according to examples of the disclosure. The system 31 of Fig. 4 also comprises an apparatus 1, a source of alpha particles 33 and a detector 35. The detector 35 may be as described above, however in the example system of Fig. 4 the source of alpha particles 33 is provided within the apparatus 1.

In the example of Fig. 4 the source 33 of alpha particles 33 is provided within the identification portion 3. The source 33 of alpha particles comprises a plurality of⁻²⁴¹Am particles distributed throughout the identification portion 3. In some examples the ²⁴¹Am may be randomly distributed throughout the random graphene structure 5. This may create a plurality of beams 43 of alpha particles distributed across the surface of the identification portion 3.

The apparatus 1 also comprises a shield 41. The shield 41 may comprise any material which may be configured to block the alpha particles from the rear of the apparatus 1. The shield 41 may comprise any suitable material which may block alpha particles such as plastic. The shield 41 may reduce the levels of radiation that a user is exposed to.

The apparatus 1 may be identified, as described above, by comparing a detected scattering pattern.

It is to be appreciated that other systems 31 may comprise more than one source 33 of alpha particles. For instance a system 31 could comprise a first source 33 of alpha particles within an apparatus 1 and a second source 33 of alpha particles in a separate device.

Fig. 5 illustrates a method. The example method of Fig. 5 may be used to provide an apparatus 1 as described above. The method comprises, at block 51 providing an identification portion 3 wherein the identification portion 3 is configured to be positioned between a source 33 of alpha particles and an alpha particle detector 35 and wherein the identification portion 3 comprises a random graphene structure 5.

In the examples described above the identification portion 3 is configured to enable an apparatus 1 to be uniquely identified. In other examples the identification portion 3, or at least part of the identification portion 3, may enable an apparatus 1 to be identified as one of a group comprising a plurality of apparatus 1. For instance an identical support structure 21 for a random graphene structure 5 may be provided in a plurality of different apparatus 1. The support structure 21 may be identified to enable an apparatus 1 to be identified as one of the group of apparatus 1. Each apparatus 1 may also have an overlaying random structure 23 which may be unique to each apparatus and which may enable the apparatus 1 to be uniquely identified. In such examples the support structure 21 may provide a clonable structure and may be used for a first level of authentication or authorization. The overlaying random structure 23 may provide a physically unclonable function and be used to provide a second, higher level of authentication of authorization. This may enable the same apparatus 1 to provide different levels of identification and security.

Examples of the disclosure may also be configured to provide a multi-key lock mechanism. In such examples a plurality of apparatus 1 may be positioned adjacent to the detector 35 to create a combined scattering pattern. The combined scattering pattern may then be identified as described above. In some examples the plurality of apparatus 1 may be positioned overlapping each other so that the beam 37 of alpha particles is scattered by an identification portion 3 of a first apparatus and then by a an identification portion of a second apparatus. Such arrangements may be used in systems such as the system of Fig. 3 where the source 33 of alpha particles is provided in a separate device. Where the apparatus 1 comprises a shield 41 which would prevent the alpha particles from passing through multiple apparatus 1 the plurality of apparatus 1 may be positioned side by side in front of the detector 35. This may provide a high level of security as it may require two or more apparatus 1 to be identified to enable authorization.

In some examples the detector 35 may also comprise a random graphene structure 5. The random graphene structure 5 may be positioned in front of the sensor 38 so that the scattering pattern which is detected by the sensor 38 is a combined scattering pattern from the apparatus 1 and the detector. This may enable both the apparatus 1 and the detector 35 to be identified. This may provide for a more secure system as it may enable an authorization system to identify that a signal has been received from an authorized detector 35 before the apparatus 1 is identified.

Examples of the disclosure provide physically unclonable functions which provide a secure authentication or identification system. As the physically unclonable functions comprise random graphene structures 5 the physically unclonable functions can be easily manufactured but cannot be copied.

As the physically unclonable functions comprise random graphene structures 5 this enables the physically unclonable functions to be provided within identification devices such as key, an identification card, a passport, access card or any other suitable device.

The random graphene structures 5 can be created to have different levels of structure. This may enable different levels of security to be provided by the same apparatus 1.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this brief description, reference has been made to various examples. The description of features or functions in relation to an example indicates that those features or functions are present in that example. The use of the term "example" or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a subclass of the class that includes some but not all of the instances in the class. It is therefore implicitly disclosed that a features described with reference to one example but not with reference to another example, can where possible be used in that other example but does not necessarily have to be used in that other example.

Although examples of the disclosure have been described in the preceding paragraphs with reference to various examples, it should be appreciated that modifications to the examples given can be made without departing from the scope of the invention as claimed.

For instance, in the examples described above only one source 33 of alpha particles is provided. It is to be appreciated that in other examples a plurality of sources 33 of alpha particles could be provided. In some examples the plurality of sources 33 of alpha particles could be arranged so as to divide the overall area of the identification portion 3 into a plurality of smaller areas. In some examples the shape of the apparatus 1 may be such that more than one source 33 of alpha particles is needed. For instance the apparatus 1 may be curved or may comprise more than one identification portion 3. In some examples having multiple sources 33 of alpha particles may enable the container of the sources 33 of alpha particles to be thinner. This may enable the apparatus 1 to be positioned closer to the sources 33 of alpha particles.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:
an identification portion wherein the identification portion is configured to be positioned between at least one source of alpha particles and an alpha particle detector and wherein the identification portion comprises a random graphene structure.

2. An apparatus as claimed in any preceding claim wherein the random graphene structure is arranged to give a unique scattering pattern of the alpha particles.

3. An apparatus as claimed in any preceding claims wherein the random graphene structure comprises multi-layers of graphene covered by random sized graphene elements.

4. An apparatus as claimed in claim 3 wherein the graphene elements comprise at least one of graphene flakes, carbon nanotube networks.

5. An apparatus as claimed in any preceding claim wherein the random graphene structure provides a physically unclonable function.

6. An apparatus as claimed in any preceding claim wherein the identification portion comprises a support structure and an overlaying random structure.

7. An apparatus as claimed in claim 6 wherein the support structure enables the apparatus to be identified as a member of a group of apparatus.

8. An apparatus as claimed in any of claims 6 to 7 wherein the overlaying random structure enable the apparatus to be uniquely identified.

9. An apparatus as claimed in any preceding claim wherein the apparatus is configured to be used as a mechanical key.

10. An apparatus as claimed in any preceding claim wherein the apparatus further comprises at least one source of alpha particles.

11. An apparatus as claimed in any preceding claim wherein the at least one source of alpha particles comprises Americium 241.

12. An identification device comprising an apparatus as claimed in any of claims 1 to 11.

13. A system comprising an apparatus as claimed in any of claims 1 to 11 and an alpha particle detector.

14. A method comprising:
providing an identification portion wherein the identification portion is configured to be positioned between at least one source of alpha particles and an alpha particle detector and wherein the identification portion comprises a random graphene structure.

15. A method as claimed in claim 14 wherein the random graphene structure is arranged to give a unique scattering pattern of the alpha particles.
